# EUROPEAN PATENT APPLICATION

(11) **EP 3 967 977 A1**
(43) Date of publication of application: **16.03.2022**
(21) Application number: 21192570.6
(22) Date of filing: 23.08.2021
(51) Int. Cl.: G01C 21/34, G06Q 10/04

(54) **METHOD, APPARATUS, AND SYSTEM FOR COMPUTING A RECOMMENDED STARTING POINT AND TOUR SEQUENCE BASED ON MULTIPLE POINTS OF INTEREST**

(30) Priority: 31.08.2020 US 202063072680 P; 10.12.2020 US 202017118195
(71) Applicant: HERE Global B.V., 5611 ZT Eindhoven (NL)
(72) Inventor: BEAUREPAIRE, Jerome, 10715 Berlin (DE); UNGER, Jens, 14052 Berlin (DE); HASHISHO, Basel, 13158 Berlin (DE)
(74) Representative: Potter Clarkson

(57) **Abstract**

An approach is disclosed for determining an optimal starting point and tour sequence based on a set of POIs to visit within a given timeframe. The approach involves, for example, receiving a request specifying a plurality of points of interest. The approach also involves determining a plurality of geographic locations associated with the plurality of points of interest. The approach further involves determining a starting area or one or more starting locations within the starting area from which to start a tour of the plurality of points of interest based on the determined plurality of geographic locations. The approach further involves providing the starting area or the one or more starting locations as an output.

## Description

### RELATED APPLICATION

This application claims priority from U.S. Provisional Application Serial No. 63/072,680, entitled "COMPUTING A RECOMMENDED STARTING POINT AND TOUR SEQUENCE BASED ON MULTIPLE POINTS OF INTEREST," filed on August 31, 2020, the contents of which are hereby incorporated herein in their entirety by this reference.

### BACKGROUND

Location-based service providers (e.g., mapping and navigation providers) are continually challenged to provide compelling services and applications. One area of development relates to providing users navigation support when traveling and/or wanting to visit multiple points of interest (POIs). For example, users often want to plan trips where they can visit multiple sites and/or participate in various activities during their trip (e.g., taking a "tour" of the area that the user is visiting). A user on a vacation trip, for example, may want to tour multiple tourist attractions (e.g., a museum, a monument, etc.) and/or participate in various cultural or sport-related activities in that area (e.g., seeing a play, watching a sport match, etc.). Similarly, a user on a business trip, for example, may want to visit several customers. However, users are often on a tight schedule to complete such visits or activities (e.g., to minimize costs). In addition, the users may be unfamiliar with the area and, therefore, feel as though they are on their own to figure out the best starting location (e.g., a hotel) to complete the tour without wasting time. Accordingly, service providers face significant technical challenges with respect to helping users plan tours or visit multiple POIs.

### SOME EXAMPLE EMBODIMENTS

Therefore, there is a need for an approach for determining an optimal starting point and tour sequence based on a set of POIs to visit within a given timeframe.

According to one embodiment, a method comprises receiving a request specifying a plurality of points of interest. The method also comprises determining a plurality of geographic locations associated with the plurality of points of interest. The method further comprises determining a starting area or one or more starting locations within the starting area from which to start a tour of the plurality of points of interest based on the determined plurality of geographic locations. The method further comprises providing the starting area or the one or more starting locations as an output.

According to another embodiment, an apparatus comprises at least one processor, and at least one memory including computer program code for one or more computer programs, the at least one memory and the computer program code configured to, with the at least one processor, cause, at least in part, the apparatus to receive a request specifying a plurality of points of interest. The apparatus is also caused to determine a plurality of geographic locations associated with the plurality of points of interest. The apparatus is further caused to determine a starting area or one or more starting locations within the starting area from which to start a tour of the plurality of points of interest based on the determined plurality of geographic locations. The apparatus is further caused to provide the starting area or the one or more starting locations as an output.

According to another embodiment, a non-transitory computer-readable storage medium having stored thereon one or more program instructions which, when executed by one or more processors, cause, at least in part, an apparatus to receive a request specifying a plurality of points of interest. The apparatus is also caused to determine a plurality of geographic locations associated with the plurality of points of interest. The apparatus is further caused to determine a starting area or one or more starting locations within the starting area from which to start a multi-day tour of the plurality of points of interest based on the determined plurality of geographic locations. The apparatus is further caused to provide the starting area or the one or more starting locations as an output.

According to another embodiment, an apparatus comprises means for determining non-positioning related sensor data collected from one or more sensors of a device. The apparatus also comprises means for processing the non-positioning related sensor data to determine an observed mobility pattern. The apparatus further comprises means for making a determination that the observed mobility pattern corresponds to reference data associated with a non-specific location, the non-specific location being at a designated location specificity level. Based on the determination, the apparatus further comprises means for providing an output indicating that the device is located at the non-specific location.

The following numbered paragraphs are also disclosed:
1. A method comprising:
   receiving a request specifying a plurality of points of interest;
   determining a plurality of geographic locations associated with the plurality of points of interest;
   determining a starting area or one or more starting locations within the starting area from which to start a tour of the plurality of points of interest based on the determined plurality of geographic locations; and
   providing the starting area or the one or more starting locations as an output.
2. The method of paragraph 1, further comprising:
   calculating isoline routing data between the plurality of points of interest to determine the starting area,
   wherein the starting area is bounded by one or more isolines indicated in the isoline routing data.
3. The method of paragraph 1, further comprising:
   determining the one or more starting locations based on a spatial search of the starting area,
   wherein the spatial search is based on one or more categories of points of interests.
4. The method of paragraph 1, wherein the one or more starting locations comprise possible accommodation(s).
5. The method of paragraph 1, further comprising:
   determining a tour set based on the starting area or the one or more starting locations and the plurality of points of interest,
   wherein the tour set comprises a sequence of the plurality of points of interest to visit during the tour; and
   wherein the output further includes a representation of the tour set.
6. The method of paragraph 5, wherein the tour is a multi-day tour, and wherein the tour set is determined for each day of the multi-day tour.
7. The method of paragraph 5, further comprising:
   receiving another request specifying the sequence, the one or more dwell times, the plurality of points of interest, or a combination thereof after the determination of the tour set;
   determining another tour set based on the receipt of the another request; and
   wherein the output further includes a representation of the another tour set.
8. The method of paragraph 5, wherein the request further specifies one or more dwell times, one or more timeframes for conducting the tour, or a combination thereof, and
   wherein the tour set is further based on the specified one or more dwell times, one or more timeframes, or a combination thereof.
9. The method of paragraph 8, wherein the one or more timeframes includes a specified number of days, a specified number of hours in a day, a date, a date range, a season, or a combination thereof for conducting the tour.
10. The method of paragraph 5, further comprising:
   determining one or more travel times between the plurality of points of interest, one or more dwell times for each of the plurality of points of interest, or a combination thereof,
   wherein the tour set is further based on the one or more travel times, the one or more dwell times, or a combination thereof, and
   wherein the tour set comprises time data for visiting the plurality of points of interests according to the sequence.
11. The method of paragraph 10, wherein the one or more travel times are determined based on one or more modes of transport to be used during the tour.
12. The method of paragraph 10, further comprising:
   determining a recommended number of days to complete the tour based on the plurality of points of interest, the one or more dwell times, and the one or more travel times,
   wherein the output further includes a representation of the recommended number of days.
13. The method of paragraph 10, wherein the sequence, the time data, the one or more dwell times, or a combination thereof is based on first population density data associated with the plurality of points of interest, second population density data associated with one or more modes of transport to be used during the tour, point of interest priority data, preference data, historical mobility data, or a combination thereof.
14. The method of paragraph 1, wherein the output comprises a user interface representing the starting area, the one or more starting locations, the plurality of points of interest locations, one or more recommended routes to conduct the tour, or a combination thereof.
15. The method of paragraph 1, wherein the request specifying the plurality of points of interest involves selecting the plurality of points of interest from a list, geographic coordinates, a digital map, or a combination thereof.
16. An apparatus comprising:
   at least one processor; and
   at least one memory including computer program code for one or more programs,
   the at least one memory and the computer program code configured to, with the at least one processor, cause the apparatus to perform at least the following operations:
      receive a request specifying a plurality of points of interest;
      determine a plurality of geographic locations associated with the plurality of points of interest;
      determine a starting area or one or more starting locations within the starting area from which to start a tour of the plurality of points of interest based on the determined plurality of geographic locations; and
      provide the starting area or the one or more starting locations as an output.
17. The apparatus of paragraph 16, wherein the apparatus is further caused to:
   determine a tour set based on the starting area or the one or more starting locations and the plurality of points of interest,
   wherein the tour set comprises a sequence of the plurality of points of interest to visit during the tour; and
   wherein the output further includes a representation of the tour set.
18. The apparatus of paragraph 17, wherein the tour is a multi-day tour, and wherein the tour set is determined for each day of the multi-day tour.
19. A non-transitory computer-readable storage medium having stored thereon one or more program instructions which, when executed by one or more processors, cause an apparatus to at least perform the following operations:
   receiving a request specifying a plurality of points of interest;
   determining a plurality of geographic locations associated with the plurality of points of interest;
   determining a starting area or one or more starting locations within the starting area from which to start a multi-day tour of the plurality of points of interest based on the determined plurality of geographic locations; and
   providing the starting area or the one or more starting locations as an output.
20. The non-transitory computer-readable storage medium of paragraph 19, wherein the apparatus is further caused to perform:
   determining a tour set for each day of the multi-day tour based on the starting area or the one or more starting locations and the plurality of points of interest,
   wherein the tour set comprises a sequence of the plurality of points of interest to visit during the multi-day tour; and
   wherein the output further includes a representation of the tour set.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of determining an optimal starting point and tour sequence based on a set of POIs to visit within a given timeframe, according to example embodiment(s);
FIGs. 2A and 2B are illustrative examples of isoline routing data for a given set of POIs, according to example embodiment(s);
FIG. 3 is a diagram of the components of a mapping platform, according to example embodiment(s);
FIG. 4 is a flowchart of a process for determining an optimal starting point and tour sequence based on a set of POIs to visit within a given timeframe, according to example embodiment(s);
FIGs. 5A through 5G are diagrams of example user interfaces for determining an optimal starting point and tour sequence based on a set of POIs to visit within a given timeframe, according to example embodiment(s);
FIG. 6 is a diagram of a geographic database, according to example embodiment(s);
FIG. 7 is a diagram of hardware that can be used to implement example embodiment(s);
FIG. 8 is a diagram of a chip set that can be used to implement example embodiment(s); and
FIG. 9 is a diagram of a mobile terminal (e.g., handset or vehicle or part thereof) that can be used to implement example embodiment(s).

### DESCRIPTION OF SOME EMBODIMENTS

Examples of a method, apparatus, and computer program for determining an optimal starting point and tour sequence based on a set of POIs to visit within a given timeframe are disclosed. In the following description, for the purposes of explanation, numerous specific details are set forth to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form to avoid unnecessarily obscuring the embodiments of the invention.

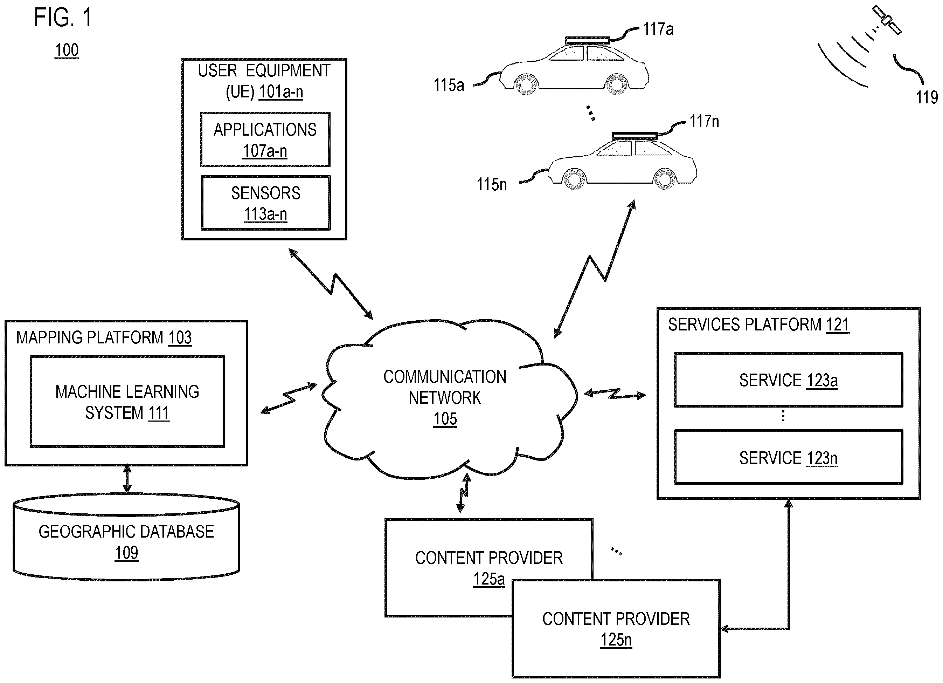

FIG. 1 is a diagram of a system capable of determining an optimal starting point and tour sequence based on a set of POIs to visit within a given timeframe, according to example embodiment(s). As described above, location-based service providers (e.g., mapping and navigation providers) are continually challenged to provide compelling services and applications. One area of development relates to providing users navigation support when traveling and/or wanting to visit multiple POIs. For example, users often want to plan trips where they can visit multiple sites and/or participate in various activities during their trip (e.g., taking a "tour" of the area that the user is visiting). A user on a vacation trip, for example, may want to tour multiple tourist attractions (e.g., a museum, a monument, etc.) and/or participate in various cultural or sport-related activities in that area (e.g., seeing a play at a theater, watching a sport match at a stadium, etc.). Similarly, a user on a business trip, for example, may want to visit several customers. However, users are often on tight schedules to complete such visits or activities (e.g., to minimize costs). In addition, the users may be unfamiliar with the area and, therefore, feel as though they are on their own to figure out the best starting location (e.g., a hotel) to complete the tour without wasting time. By way of example, without a sufficient itinerary, users may waste time and/or money (e.g., a travel budget) needlessly crisscrossing an area, taking routes at busy or crowded times, visiting POIs at busy or crowded times, etc. Accordingly, service providers face significant technical challenges to compute a starting point and tour sequence to visit multiple POIs.

To address these technical problems, a system 100 of FIG. 1 introduces a capability to determine an optimal starting point and tour sequence based on a set of POIs to visit or reach within a given timeframe, according to example embodiment(s). In one example use case, a user may have 2 days to spend in Paris (e.g., while on vacation) and wants to visit 11 sights including the Eiffel Tower, Gare du Nord, and Centre Pompidou.

In one embodiment, the system 100 can use modal isolines (e.g., based on public transport, private transport, walking, etc.) to determine an optimal starting area and then perform a hotel search within the starting area (e.g., according to a filter criteria). In one instance, an optimal starting point or location may be a starting point or location (e.g., a hotel) that can enable a user to visit all the POIs of interest without having to unnecessarily waste time (e.g., crisscrossing the area bounding the POIs, visiting a POI during a busy or crowded time, etc.). In one embodiment, an optimal starting point or location may be a starting point or location that enables a user to reach all the POIs of interest in the least or minimum amount of time. Further, an optimal starting point or location may also be a starting point or location that enables a user to visit all POIs of interest with the lowest cost or expense, the least inconvenience or stress, or any similar cost functions.

In one embodiment, the system 100 can determine a tour set (e.g., a sequence of the POIs to visit and the time associated with each visit) based on the starting area and/or starting location. In one instance, the system 100 can use a routing algorithm to determine the tour set or sequence. For example, the system 100 can use a routing algorithm to determine the shortest possible route that connects all the POIs of interest (e.g., without unnecessarily crisscrossing an area) or the least expensive route (e.g., via public transport). In one embodiment, the system 100 can use a travelling salesman problem (TSP) algorithm (e.g., as an undirected weighted graph) to determine the shortest possible route. For example, the system 100 can use the POIs of interest as the graph's vertices, paths between POIs as the graph's edges, and a path's distance as the edge's weight.

In one embodiment, the system 100 can collect one or more dwelling times (e.g., a desired or recommended time to spend at or within a POI) and population density data (e.g., traffic data, historic mobility data, etc.) as one or more inputs (e.g., for use with the routing algorithm) to further determine tour set or sequence (e.g., the shortest route). For example, having the dwell times and population density data can help the system 100 to avoid generating a tour set or sequence that includes busy travel routes and/or popular POIs hours.

In one embodiment, the system 100 can determine a set of places or POIs to visit (e.g., 12 POIs), a given timeframe (e.g., 3 days), and/or one or more user preferences based, for example, on one or more user inputs via one or more user equipment (UE) 101a-101n (also collectively referred to herein as UEs 101) (e.g., a mobile device, a smartphone, etc.) having connectivity to a mapping platform 103 via the communication network 105 and including one or more applications 107a-107n (also collectively referred to herein as applications 107) (e.g., a navigation application, a mapping application, a booking/reservation application, etc.).

In one embodiment, the system 100 can retrieve information or data (e.g., stored in or accessed via the geographic database 109) related to travel times and/or dwell times for the POIs of interest to be used by the system 100 to compute an optimal starting area for visiting the POIs in the given timeframe. For example, the starting area or location can be an area that enables the user to tour or visit the selected multiple POIs in a way that minimizes one or more designated routing cost functions (e.g., minimum travel time, minimum travel distance, minimum travel cost, etc.) or other equivalent criteria. In one embodiment, the starting area or location serves as the home base or point from which the user begins and returns during a tour. In other words, the starting area or location may serve as a "center of gravity" for the tour. During a multi-day tour, the starting area or location can correspond to or include a hotel where the user is staying during the visit or tour. In other words, in one embodiment, the starting area may include one or more accommodation(s) (e.g., a hotel, lodging, a house or apartment for rent, a camp site, etc.). In a business use case, the starting area or location can include an office or business location from which the user starts and/or returns to during the tour. In one instance, the starting area may include one or more locations suitable for meeting one or more other users to visit the POIs of interest as a collective or as part of a tour group (e.g., a restaurant, an outdoor park, a parking lot, a landmark, a monument, etc.). In another example, the starting area may be based on or biased towards a transportation hub (e.g., an airport, a train station, etc.) that is near, proximate, and/or relatively close to the POIs of interest.

In one instance, the system 100 can compute the optimal starting area (e.g., using heuristics, rules, etc. or in some embodiments, the machine learning system 111) based on one or more example inputs:
- POIs with weighted preferences and desired dwelling times;
- Starting point parameters;
- Hotel: Price, Stars, etc.;
- Set of known locations or starting point preferences;
- User preferences (transport modes, etc.);
- User's calendar;
- Numbers and durations of tours;
- Mobility Graph/historical movement patterns/familiar places;
- Population density models (e.g., avoid Louvre/Subway at peak times);
- Weather;
- Traffic;
- Etc.

In one embodiment, the system 100 can also retrieve or collect information or data (e.g., probe data) related to one or more travel times and/or one or more dwell times for the POIs of interest from one or more device sensors 113a-113n (also collectively referred to as device sensors 113) (e.g., global positioning system (GPS) sensors, accelerometer, etc.) of the UEs 101 and/or one or more vehicles 115a-115n (also collectively referred to herein as vehicles 115) (e.g., standard vehicles, autonomous vehicles, shared vehicles, etc.) including one or more vehicle sensors 117a-117n (also collectively referred to as vehicle sensors 117) (e.g., GPS sensors) and having connectivity to the mapping platform 103 via the communication network 105.

In one embodiment, the system 100 can compute an optimal starting area by growing or computing isolines of increasing size or area from all POIs of interest until a geographic area or location corresponding to the intersection of the isoline routing areas is found. In one embodiment, the isolines can represent the computed geographic extent that is reachable from a selected POI within a specified travel parameter (e.g., travel time, travel distance, etc.). The extent of the isolines, for instance, can be based on the maximum extent between any two POIs under evaluation. In one instance, the system 100 can grow or compute the isolines based on the area of reach from or to a given spot (e.g., a POI) based on time, distance, fuel consumption, or a combination thereof. In one embodiment, the system 100 can compute the isolines for both gas and electric vehicle dynamics, as well as physical restrictions such as size, weight, and height. In one instance, the system 100 can compute the isolines based on the applicable paths or routes depending on the means or mode of transport of interest (e.g., public, private, walking, etc.).

In one instance, the system 100 can search (e.g., using the machine learning system 111) the intersection region of the various isolines for one or more valid starting points (e.g., a hotel). By way of example, a valid starting point may be a starting point that satisfies a threshold number of user requirements, parameters, and/or preferences (e.g., availability, cost, amenities, service, etc.). In one instance, if the system 100 determines that there are no valid starting points, the system 100 can grow the isolines/intersection until a valid starting point can be found.

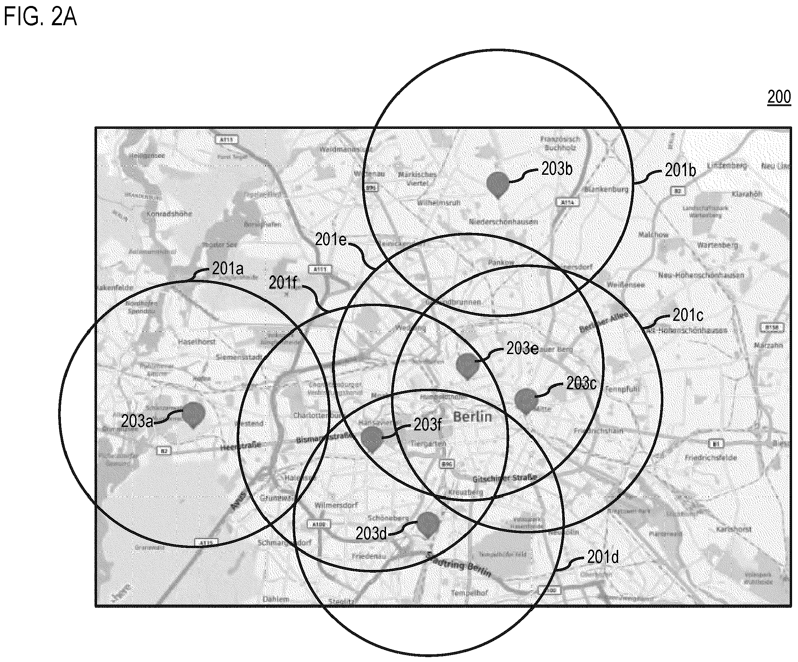

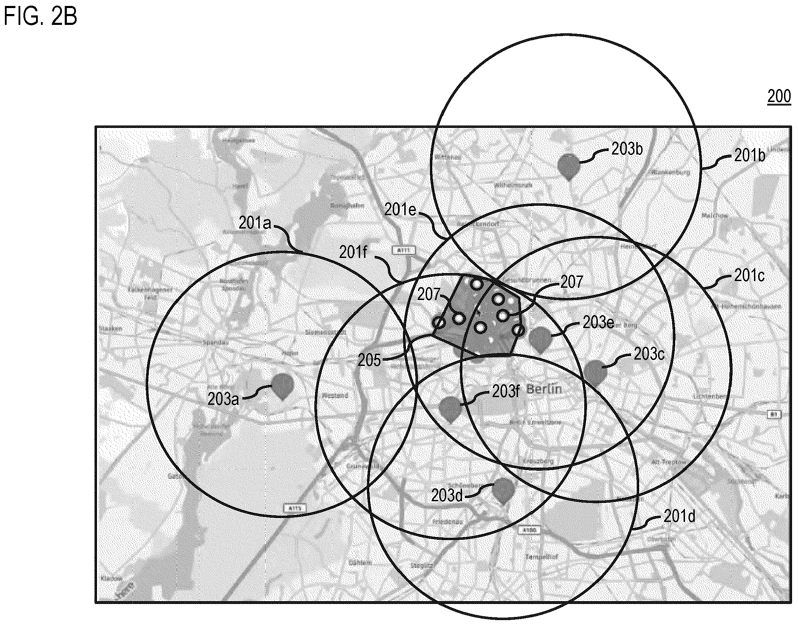

FIGs. 2A and 2B are illustrative examples of isoline routing for a given set of POIs, according to example embodiment(s). Referring to FIG. 2A, in one embodiment, the system 100 computes an optimal starting point by growing respective isolines 201a-201f from all POIs of interest 203a-203f within a region 200 (e.g., Berlin) until they intersect (e.g., upon reaching a threshold level of overlap). In one instance, the system 100 searches an intersection region (e.g., region 205) for valid starting points (e.g., hotels 207), as depicted in FIG. 2B. In this illustrative example, the intersection region 205 is bounded by or touches 5 of the 6 isolines 201 (e.g., isolines 201b-20f).

In one embodiment, the system 100 can create a tour set (e.g., a sequence of the POIs to visit and the time associated with each visit) starting at the previously defined starting point (e.g., the optimal starting point onward). In one instance, the system 100 can use a tour planning application programming interface (API) and/or an application 107 (e.g., a booking/reservation application) to receive a user determined number of tours (e.g., 3 days) and a number of POIs (e.g., 12 POIs) and using the set of starting points (e.g., hotels) can generate an optimal tour (e.g., using the machine learning system 111) as well as a list of alternative tours (e.g., a single day tour or multi-day tour).

In one instance, the system 100 can surface or render the tour (e.g., via a calendar application 107) such that it includes an hour by hour itinerary and/or tour plan. In one embodiment, the system 100 can enable a user to refine the order of the tours as well as the parameters (e.g., dwell time) after the initial computation or during the tour itself as well as removing or adding one or more POIs of interest. In one instance, the system 100 can also compute the tour sequence in real-time or substantially real-time based on a user wanting to spend more or less time at a particular POI (e.g., there may be an exhibit of particular interest at a museum, a favorite soccer team playing a match at a nearby stadium, or the user may not be feeling well at that moment, etc.).

In one embodiment, given a set of POIs of interest to visit, the system 100 can determine an optimal timeframe to visit those places. In one instance, the system 100 can determine the optimal timeframe based on historic or average crowds or costs, ongoing or likely special events, historic or average temperatures or weather, or any other factors that may affect a user's experience or comfortability while visiting one or more of the POIs of interest.

For example, a user may want to visit 20 POIs while in Paris and would like to know which dates or season would be best or most optimal for visiting those places. For example, the system 100 can determine that there are three possible timeframes (e.g., A, B, and C) for the user to visit the 20 POIs in Paris. In this example, the system 100 can rank timeframe A as the least optimal based on the determination that there are many tourists during this time, public transport is crowded, and traffic is bad. Thus, visiting all 20 POIs would take more than a week (e.g., 8 days). In this example, the system 100 can also rank timeframe B as less than optimal based on the determination that there are often many fairs during this time and visiting all 20 POIs would take an entire week. In contrast, the system 100 can rank timeframe C as the most optimal relative to A and B since Paris is less busy during this time, public transport is less crowded, traffic is light, and the museums are often hall full. Thus, visiting all 20 POIs would take less than a week (e.g., 5 days).

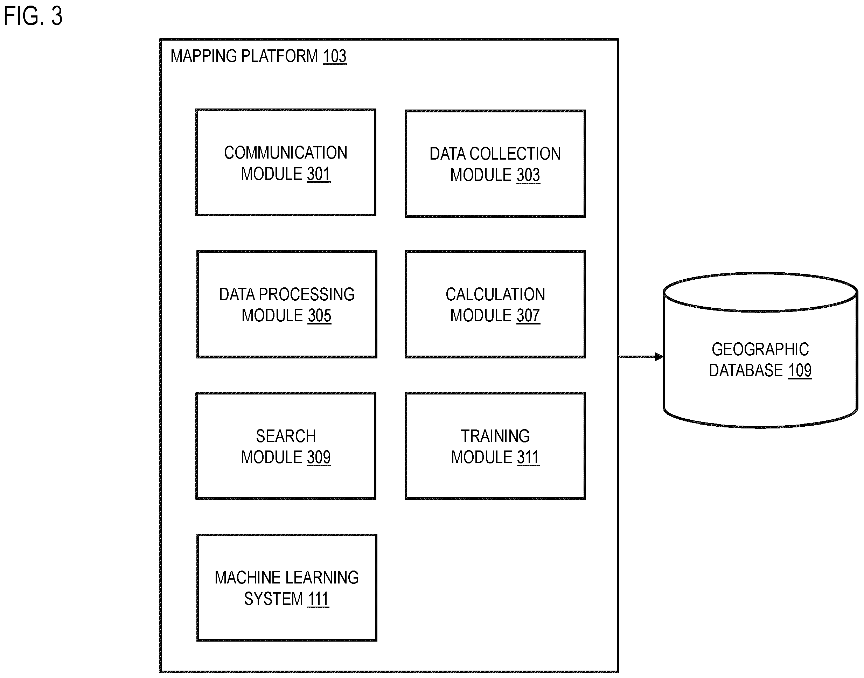

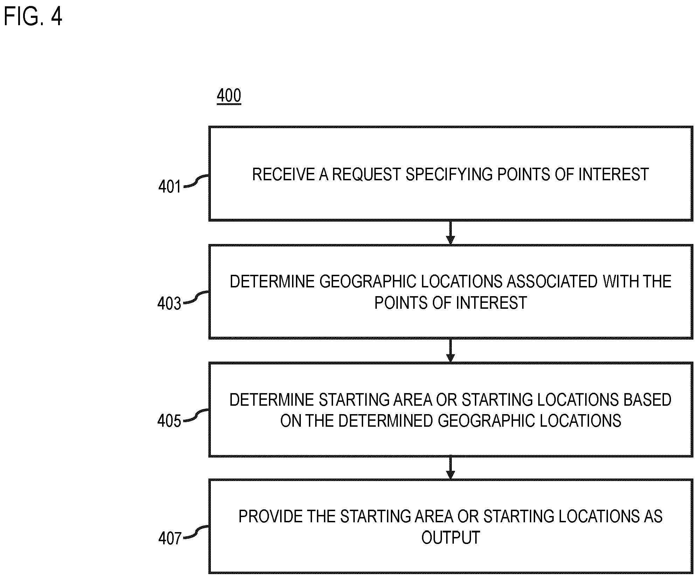

FIG. 3 is a diagram of the components of the mapping platform 103, according to example embodiment(s). By way of example, the mapping platform 103 includes one or more components for determining an optimal starting point and tour sequence based on a set of POIs to visit within a given timeframe, according to the example embodiment(s) described herein. It is contemplated that the functions of these components may be combined or performed by other components of equivalent functionality. In one embodiment, the mapping platform 103 includes a communication module 301, a data collection module 303, a data processing module 305, a calculation module 307, a search module 309, a training module 311, and the machine learning system 111, and has connectivity to the geographic database 109. The above presented modules and components of the mapping platform 103 can be implemented in hardware, firmware, software, or a combination thereof. Though depicted as a separate entity in FIG. 1, it is contemplated that the mapping platform 103 may be implemented as a module of any other component of the system 100. In another embodiment, the mapping platform 103, the machine learning system 111, and/or the modules 301-311 may be implemented as a cloud-based service, local service, native application, or combination thereof. The functions of the mapping platform 103, the machine learning system 111, and/or the modules 301-311 are discussed with respect to FIG. 4.

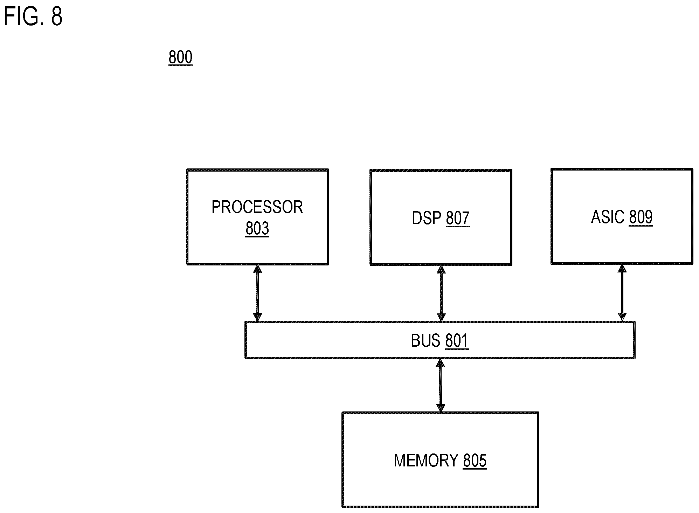

FIG. 4 is a flowchart of a process for determining an optimal starting point and tour sequence based on a set of POIs to visit within a given timeframe, according to example embodiment(s). In various embodiments, the mapping platform 103, the machine learning system 111, and/or any of the modules 301-311 may perform one or more portions of the process 400 and may be implemented in, for instance, a chip set including a processor and a memory as shown in FIG. 8. As such, the mapping platform 103, the machine learning system 111, and/or the modules 301-311 can provide means for accomplishing various parts of the process 400, as well as means for accomplishing embodiments of other processes described herein in conjunction with other components of the system 100. Although the process 400 is illustrated and described as a sequence of steps, its contemplated that various embodiments of the process 400 may be performed in any order or combination and need not include all the illustrated steps.

In step 401, the communication module 301 can receive a request specifying a plurality of POIs. In one embodiment, the communication module 301 can receive a request (e.g., via an application 107) based on a selection or identification of the plurality of POIs (e.g., by a user) from a list (e.g., a dropdown list), geographic coordinates (e.g., latitude and longitude), a digital map (e.g., selecting a point on a map), or a combination thereof. By way of example, a plurality of POIs may be any two or more places, sights, locations, etc. that a user (e.g., an individual) may want to visit while in an area (e.g., a city, a state, a region, etc.) during a trip such as a sport or cultural venue, a built or natural landmark, an office building, a transit hub, etc. For example, while in Paris, a user may want to visit the Eiffel Tour, the Gare du Nord, the Centre Pompidou, etc. Similarly, while in New York, a user may want to visit the Empire State Building, Central Park, the Freedom Tower, etc.

In step 403, the data processing module 305 can determine a plurality of geographic locations associated with the plurality of POIs. In one embodiment, a geographic location comprises a position on the Earth and/or on a digital map (e.g., stored in or accessed via the geographic database 109). In one instance, the data processing module 305 can determine a geographic location based on the communication module 301 receiving a request (e.g., via an application 107) that specifies a POI by name and the data collection module 303 querying the geographic database 109 based on the name for the respective geographic location. By way of example, a geographic location may include a postal address, geographic coordinates (e.g., latitude and longitude), etc.

In step 405, the calculation module 307 can determine a starting area or one or more starting locations within the starting area from which to start a tour of the plurality of POIs based on the determined plurality of geographic locations. In one instance, the starting area or the one or more starting locations can be an area or location that enables a user to tour or to visit the specified POIs of interest in a way that can minimize one or more designated routing cost functions (e.g., minimum travel time, minimum travel distance, minimum travel cost, etc.) or other equivalent criteria. In one embodiment, a tour of the plurality of POIs can involve a sequence of the plurality of POIs to be performed (e.g., by a user) in a single day or it may be split into several tours distributed across two or more days (e.g., a multi-day tour). By way of example, the starting area or location can serve as the home base or point from which a user can begin and return during a tour. In other words, the starting area or location can function as a "center of gravity" for a tour.

In one embodiment, the calculation module 307 can calculate isoline routing data between the plurality of POIs to determine the starting area, wherein the starting area is bounded by one or more isolines indicated in the isoline routing data. In one instance, the calculation module 307 can calculate the isoline routing data and/or one or more isolines based on the area that a user (e.g., an individual walking, driving, or riding in a vehicle 115) or a vehicle 115 (e.g., an autonomous vehicle) can reach from the geographic location associated with a POI (e.g., geographic coordinates) in a given time or distance depending on the means or mode of transport (e.g., walking versus driving, public transport versus private transport, etc.). In one instance, the boundary or edge of the area of reach comprises the one or more isolines. In one embodiment, the calculation module 307 can calculate the isoline routing data and/or the one or more isolines based on the area of reach from or to a given spot (e.g., a POI) based on time, distance, fuel consumption (e.g., gas or electric), or a combination thereof as well as on one or more physical restrictions such as size, weight, and height.

In one embodiment, the calculation module 307 can determine that a starting area is bounded by one or more isolines based on its determination of an intersection or overlap among at least two isolines of the one or more isolines of the plurality of POIs (e.g., forming an intersection region). In one instance, wherein the calculation module 307 determines that there are no intersections or overlaps among at least two isolines, the calculation module 307 can grow or increase the size of the one or more isolines until at least two isolines intersect or overlap (e.g., forming an intersection region).

In one embodiment, the search module 309 can determine the one or more starting locations (e.g., a hotel) based on a spatial search of the starting area, wherein the spatial search is based on one or more categories of POIs (e.g., accommodations). For example, during a multi-day tour, the starting area or one or more starting locations can correspond to or include a hotel where the user is staying during a visit or tour. In other words, in one embodiment, the starting area or one or more starting locations may include one or more accommodation(s) (e.g., a hotel, an apartment for rent, a camp site, etc.). In one embodiment, the search module 309 can search the starting area for one or more starting locations based on any number of search parameters (e.g., price, availability, service, etc.). In one instance, the one or more starting locations may be a restaurant, an outdoor park, a parking lot, or any point or location where an individual or a group of individuals could begin a tour of the plurality of POIs.

In one embodiment, the calculation module 307 can also grow or increase the size of the one or more isolines until at least two isolines intersect or overlap (e.g., forming an intersection region) and the search module 309 can determine the existence or availability of one or more starting locations at or proximate to the intersection or overlap that can enable a user to tour or to visit the POIs of interest (e.g., a hotel). In one embodiment, the search module 309 can determine a second starting location (e.g., a second hotel) within the starting area based, for example, on the POIs already visited during a first tour or a change in availability during a multi-day tour.

In one instance, the starting area or one or more starting locations may consist of dropping off and/or picking up locations for a vehicle 115 (e.g., a shared vehicle). For example, the vehicle 115 may be an autonomous or semi-autonomous vehicle (e.g., an automobile), a shared vehicle (e.g., an automobile, a scooter, a bicycle, etc.), a rental car, etc. In one example use case, the starting area may be an area (e.g., of a city) that includes one or more starting locations to build a distribution center that can enable an optimal distribution of goods or products among various nearby respective POIs (e.g., retail stores). In another example use case, the starting area may be an area (e.g., of a city) that includes a one or more starting locations (e.g., homes or apartments) that a user can search (e.g., via an application 107) to determine an optimal location to live wherein the user can visit various POIs (e.g., a grocery store, restaurants, bars, etc.) in the area that minimizes one or more designated travel cost functions (e.g., minimum travel time, minimum travel distance, minimum travel cost etc.).

In step 407, the communication module 301 can provide the starting area or the one or more starting locations as an output. In one instance, the output comprises a user interface (e.g., a navigation application 107, a booking/reservation application 107, etc.) representing the starting area (e.g., a city or an area of a city), the one or more starting locations (e.g., a hotel), the plurality of POIs locations, one or more recommended routes to conduct the tour (e.g., private vehicle 115 routes and/or pedestrian routes), or a combination thereof. In one embodiment, the output comprises one or more exportable calendar entries for the full itinerary and tours (e.g., for use with a calendar application 107). The output can also, for example, comprise instructions, data, one or more signals, or a combination thereof for directing one or more vehicles 115 (e.g., a shared vehicle, an autonomous vehicle, etc.) to a pickup or drop-off location (e.g., to start a tour).

In one embodiment, the data processing module 305 can determine a tour set based on the starting area or the one or more starting locations and the plurality of POIs (e.g., 12 POIs). In one instance, the tour set can comprise a sequence of the plurality of POIs to visit during the tour and the output further can include a representation of the tour set (e.g., for use in connection with a navigation application 107). In one embodiment, the data processing module 305 can determine the tour set for each day of the multi-day tour. In one instance, the data processing module 305 can determine the tour set such that it includes an hour by hour breakdown or a breakdown by any period of time that may be useful to the user under the circumstances (e.g., every 30 minutes). For example, where the user is using or depending upon public transportation to travel between two or more POIs, the user may prefer to have itinerary updates with a shorter frequency than hour by hour to better avoid missing a connection between two POIs.

In one instance, the data processing module 305 can determine one or more travel times between the plurality of POIs, one or more dwell times for each of the plurality of POIs, or a combination thereof. In one embodiment, the data processing module 305 can determine the one or more travel times based on one or more modes of transport to be used during the tour (e.g., walking, driving, biking, etc.). In one instance, the one or more travel times may be based on multi-modal or intermodal travel between two or more POIs during a tour. For example, a user may drive or ride in a vehicle 115 for a distance between a first POI and the next POI and then walk for another distance or a remainder or a user may ride in a private vehicle 115 between a first and a second POI, but then ride in a public vehicle 115 (e.g., a bus, a tram, a subway, etc.) between one or more subsequent POIs thereafter or vice-versa. In one embodiment, the data processing module 305 can further determine a tour set based on one or more travel times, one or more dwell times, or a combination thereof. In one embodiment, the data processing module 305 can determine the tour set such that it comprises time data (e.g., time specific data) for visiting the plurality of POIs according to the sequence.

In one embodiment, the data processing module 305 can determine the sequence, the time data, the one or more dwell times, or a combination thereof based on population density data associated with the plurality of POIs (e.g., how historically crowded a POI is at a time of day, day of the week, month of the year, etc.), population density data associated with one or more modes of transport to be used during the tour (e.g., current or historic traffic data), POI priority data, preference data (e.g., POI popularity data), historical mobility data, or a combination thereof. By way of example, if a POI is historically known for having spectacular views at sunset or sunrise or if a user is particularly interested in museums (e.g., based on historical mobility data), then the data processing module 305 can determine the sequence based, for example, on an individual or a vehicle 115 being at that POI at sunset or sunrise or an individual or vehicle 115 being at the POI of particular interest earlier than later in the tour to better ensure ample visiting time.

In one embodiment, the data processing module 305 can also determine the one or more dwell times based on one or more historic mobility patterns, one or more averages (e.g., time spent in or at a POI), one or more recommended dwell times (e.g., based on size, content, etc.), or a combination thereof (e.g., stored in or accessed via the geographic database 109). For example, the data processing module 305 can determine that an average dwell time of a large museum is 2-3 hours.

In one instance, the data processing module 305 can determine a recommended number of days to complete the tour based on the plurality of POIs, the one or more dwell times, and the one or more travel times. For example, the data processing module 305 can determine (e.g., based on historical mobility data, traffic data, etc.) that to visit 12 sights in Paris, 2-3 days are often required to optimize user time at each POI (e.g., to avoid rushing). In one embodiment, the output (e.g., a navigation application 107) further includes a representation of the recommended number of days (e.g., 2-3).

In one embodiment, wherein the request (e.g., received via a UE 101) further specifies one or more dwell times, one or more timeframes for conducting the tour, or a combination thereof, the data processing module 305 can further determine the tour set based on the specified one or more dwell times, one or more timeframes, or a combination thereof. In one instance, the one or more timeframes includes a specified number of days, a specified number of hours in a day, a date, a date range, a season, or a combination thereof for conducting the tour. By way of example, a user may specify (e.g., via a navigation application 107) that she only wants to spend 1 hour at the Eiffel Tower and 1 hour at the Cathedral Notre Dame, but wants to spend 3 hours at the Louvre. Likewise, the user may specify (e.g., via a booking/reservation application 107) that she only wants to visit Paris in May, or the spring, etc.

In one instance, the communication module 301 can receive (e.g., via an application 107) another request (e.g., a subsequent request) specifying the sequence, the one or more dwell times, the plurality of POIs, or a combination thereof after the determination of the tour set. In one embodiment, a user can, for example, refine the order of the tour(s) as well as the one or more parameters (e.g., dwell time) after the initial computation by the data processing module 305 or during the tour itself as well as removing possible POIs if time is scarce or adding possible POIs if additional time is available. In one embodiment, the data processing 305 can determine another tour set (e.g., a new or modified tour set) based on the receipt of another request (e.g., via an application 107), wherein the output further includes a representation of the another tour set. In one instance, the data processing module 305 can determine another tour set in real-time or substantially real time based on a user wanting to spend more or less dwell time at one or more POIs or based on a user actually spending more or less dwell time at one or more POIs. In one embodiment, the data processing module 305 can determine the another tour set with one or more suitable alternative POIs depending on a user's desired changes with respect to the one or more dwell times or a user's actual changes with respect to the one or more dwell times. For example, a user may get stuck in traffic between two POIs and, therefore, may no longer have enough time to reach a desired restaurant, but the data processing module 305 can determine that a similar restaurant is nearby or along the route and, therefore, include the alternative POI in the new or modified tour set.

In one embodiment, the training module 311 and the machine learning system 111 can select and/or update respective weights or weighting schemes related to the one or more inputs (e.g., weighted preferences and desired dwelling times) used by the calculation module 307 to determine a starting area or one or more starting locations and/or by the data processing module 305 to determine a tour set or another tour (e.g., a subsequent or updated tour set). In one instance, the training module 311 can continuously provide and/or update a machine learning module (e.g., a support vector machine (SVM), neural network, decision tree, etc.) of the machine learning system 111 during training using, for instance, supervised deep convolution networks or equivalents. By way of example, the training module 311 can train a machine learning model using the respective weights or weight schemes of the one or more inputs to enable the calculation module 307 to determine a starting area or one or more starting locations and tour set (or updated tour set) to enable a user to most efficiently visit all the POIs of interest (e.g., in a minimal time, with the least effort, minimal cost, most convenience, etc.).

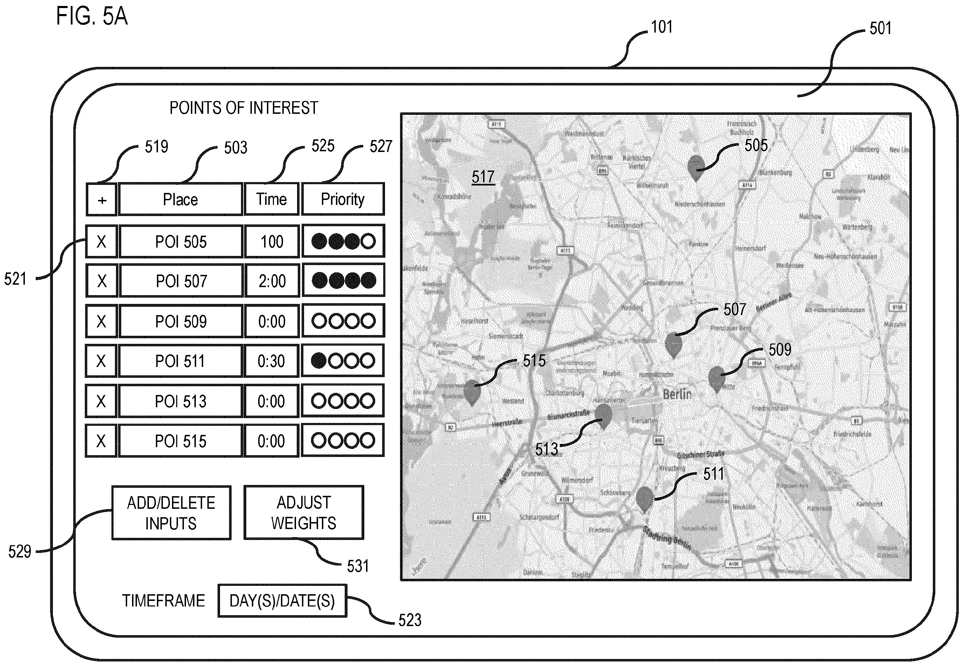

FIGs. 5A through 5G are diagrams of example user interfaces capable of determining an optimal starting point and tour sequence based on a set of POIs to visit within a given timeframe, according to example embodiment(s). Referring to FIG. 5A, in one embodiment, the system 100 generates a user interface (UI) 501 (e.g., a navigation application 107, a booking/reservation application 107, etc.) (e.g., "Points of Interest") for a UE 101 (e.g., a mobile device, a smartphone, a tablet, etc.) that can allow a user (e.g., a traveler) to optimize visits of many places in a given time by computing the tours, starting point, as well as taking population densities into account. In this example, a user (e.g., an individual) may be traveling on vacation or on a business trip in a new or unfamiliar area (e.g., Berlin) and wants to visit various places over a certain timeframe.

In one embodiment, the system 100 can generate the UI 501 such that it includes one or more inputs 503 (e.g., "place") to enable a user to enter or select one or more POIs of interest (e.g., POIs 505-515) in the area (e.g., Berlin) to visit. In one embodiment, the one or more inputs 503 and all other inputs described with respect to FIGs. 5A-5G herein can be generated by the system 100 such that a user can interact with the input and/or the system 100 can receive information or data from the user through one or more physical interactions (e.g., a touch, a tap, a gesture, typing, etc.), one or more voice commands, or a combination thereof. In one embodiment, the system 100 generates the one or more inputs 503 such that a user can select a POI based on entering, typing, or saying a name; selecting or scrolling through a dropdown list; entering geographic coordinates; touching or selecting the area of the map 517; or a combination thereof. In one instance, the system 100 can generate the UI 501 such that it includes an input 519 (e.g., "+") that can enable a user to add POIs to a tour sequence as well as an input 521 (e.g., "X") that can enable a user to delete one or more of the POIs from the tour sequence. In one embodiment, the system 100 can generate the inputs 519 and 521 such that a user can add or delete POIs of interest before or during a tour (e.g., removing possible places to visit if time is scarce).

In one embodiment, the system 100 can generate the UI 501 such that it includes an input 523 (e.g., "Day(s)/Date(s)") that can enable a user to enter or specify a given timeframe (e.g., 2 days and/or May 10-11) for visiting the POIs of interest (e.g., POIs 505-515). In one embodiment, the system 100 can generate the input 523 so that a user can specify or input the number of tours, the number of hours in a day, a date, a date range, a season, or a combination therefore for visiting the POIs of interest. For example, the user may only be in Berlin for 2 days during a business conference or the user may want to know if she had only 2 days to visit the 6 POIs of interest (e.g., POIs 505-515), when should she come to Berlin, for example, to optimize her stay (and cost). In one embodiment, the system 100 can generate the input 523 such that a user can modify the timeframe in terms of days before or during a tour. For example, a user may initially believe that she only want to spend 1 day visiting the POIs, but once the tour starts, learns that she will have more time to spend in the area (e.g., upon receiving a free night stay at a hotel, or wanting to spend extra time at a POI, etc.). Likewise, a user may initially want to spend 3 days visiting the POIs of interest but after the first day, something may occur that affects her plans (e.g., a family emergency) or the user may decide that she only want to spend one more day visiting POIs.

In one instance, the system 100 can generate the UI 501 such that it includes one or more inputs to enable a user to enter one or more preferences and/or parameters. For example, in one embodiment, the system 100 can generate the UI 501 such that it includes one or more inputs 525 (e.g., "time") that can enable a user to select or assign a time value (e.g., a desired dwell time) for spending at or in each POI (e.g., 1 hour at POI 505, 2 hours at POI 507, and 30 minutes at POI 511). In one instance, the user can enter or leave the time value at a default value (e.g., "0:00" for POI 509) and the system 100 can determine a recommended dwell time (e.g., based on historic mobility data stored in or accessed via the geographic database 109). In one instance, the system 100 can generate the UI 501 so that it includes one or more inputs 527 (e.g., "Priority") that can enable a user to select or set a priority value for each POI (e.g., 3 for POI 505, 4 for POI 507, and 1 for POI 111). In this example, a 1 corresponds the lowest priority and a 4 corresponds to the highest priority. Also, in this example, the input 527 is represented as a graphical input (e.g., circles); however, it is contemplated that the system 100 can generate the input 527 such that it is enables an input based on one or more graphics (e.g., circles, stars, etc.), one or more letters or numbers (e.g., 1-4), etc. In one embodiment, like the time input 525, the user can leave the priority value at a default value (e.g., 0) and the system 100 can determine a recommended priority level to assign to the POI (e.g., based on historic attendance data, a calendar of events, known characteristics, etc. stored in or accessed via the geographic database 109).

In one embodiment, the system 100 can generate the UI 501 such that it includes an input 529 (e.g., "Add/Delete Inputs") that can enable a user to add or delete one or more preferences or parameters (e.g., "time," "priority," etc.) from the computation of one or more corresponding tours. For example, a user may only want to visit POIs that have air conditioning (e.g., during hot summer months) or that have a covered roof (e.g., during rainy weather), or only POIs that allow dogs, or only POIs that are kid friendly, etc. In one embodiment, the system 100 can generate the UI 501 such that it includes an input 531 (e.g., "Adjust Weights") that can enable a user (e.g., a traveler or a software developer) to adjust or modify the weights or weighting schemes used by the system 100 relative to the one or more parameters (e.g., "time," "priority," etc.) for determining the one or more tours of the POIs of interest (e.g., POIs 505-515).

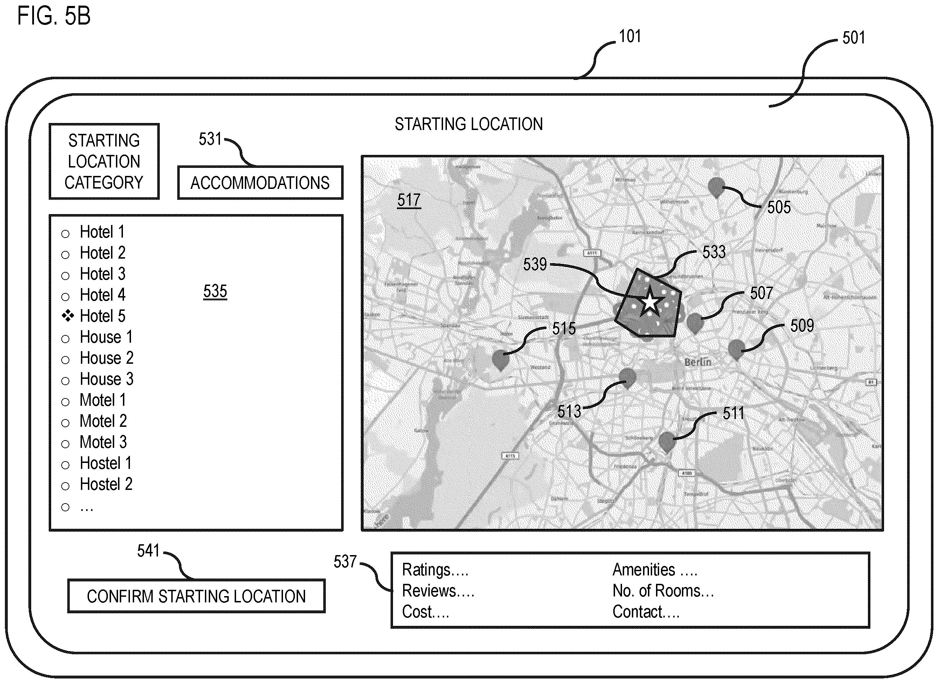

Referring to FIG. 5B, in one embodiment, the system 100 can generate the UI 501 (e.g., "Starting Location") such that it includes an input 531 (e.g., "Accommodations") that can enable a user to enter or select the type of starting locations (e.g., accommodations, restaurants, etc.) that the system 100 will search within the starting area (e.g., area 533) determined by the system 100 according to one or more of the various embodiments described above. In one instance, the system 100 can generate the UI 501 such that it includes an interactive window or input 535 populated by the system 100 (e.g., based on a spatial search) based on the input 531. For instance, in this example, the system 100 can surface all the accommodations that are located within the area 533 (e.g., hotels, houses, motels, hostels, etc.) and can render or surface corresponding relevant information (e.g., ratings, reviews, costs, amenities, number of rooms, contact information, etc. stored in or accessed via the geographic database 109) for each location in an interactive window or input 537. In this example, the user has selected Hotel 5 as indicated in the window 535 and on the map 517 (e.g., symbol 539). In one embodiment, the input 537 is interactive in that a user can touch, for example, the "contact" information to initiate a call or email to the location. In one embodiment, the system 100 can generate the UI 501 such that it includes an input 541 that can enable a user to confirm a particular location as the starting location (e.g., Hotel 5) for the purposes of computing the one or more tours of the POIs of interest (e.g., POIs 505-515).

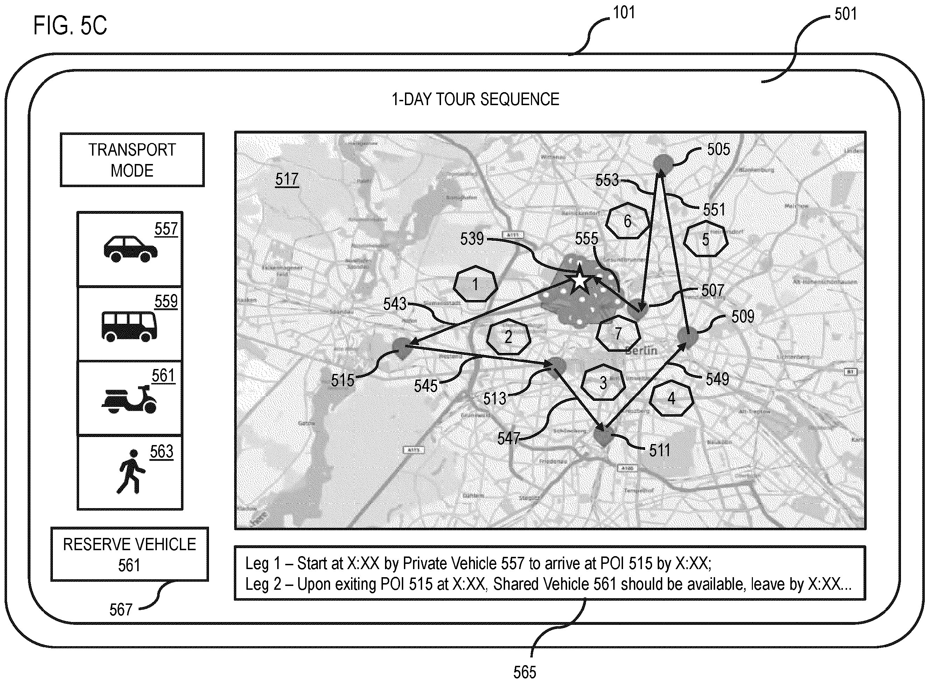

Referring to FIG. 5C, in one embodiment, the system 100 can create a tour set (e.g., a sequence of the POIs to visit and the time associate to each visit) starting at the previously defined starting point or location (e.g., Hotel 5). In one embodiment, the system 100 can generate the UI 501 (e.g., "1-Day Tour Sequence") such that the map 517 includes the routes or trips (e.g., routes 543-555) as well as the order or such routes and trips (e.g., Legs 1-7) from and back to the starting location (e.g., Hotel 5). In one embodiment, the system 100 can generate the UI 501 such that it includes one or more transport mode inputs (e.g., private vehicle 557, public transport 559, shared vehicle 561, walking 563) that can enable the user to specify or change the means or mode of desired transportation to take to or between the various POIs of interest. In one embodiment, the system 100 can compute the one or more tours, for example, using TSP with multiple modes. As a result, the system 100 can change or alter the displayed tour based on a selected mode of transport. In one instance, the system 100 can generate the UI 501 such that it includes an interactive window or input 565 that can enable a user to view the resulting itinerary and/or modifications. For example, "Leg 1 - Start at X:XX by private vehicle 557 to arrive at POI 515 by X:XX; Leg 2 - Upon exiting POI 515 at X:XX, shared vehicle 561 should be available, leave by X:XX to reach POI 513 by X:XX." In one embodiment, depending on the determined and/or surfaced itinerary, the system 100 can generate the UI 501 such that it includes an input 567 to further interact with the one or more modes of transport (e.g., reserve vehicle 561, check schedule of train 559, pay parking for vehicle 557, etc.).

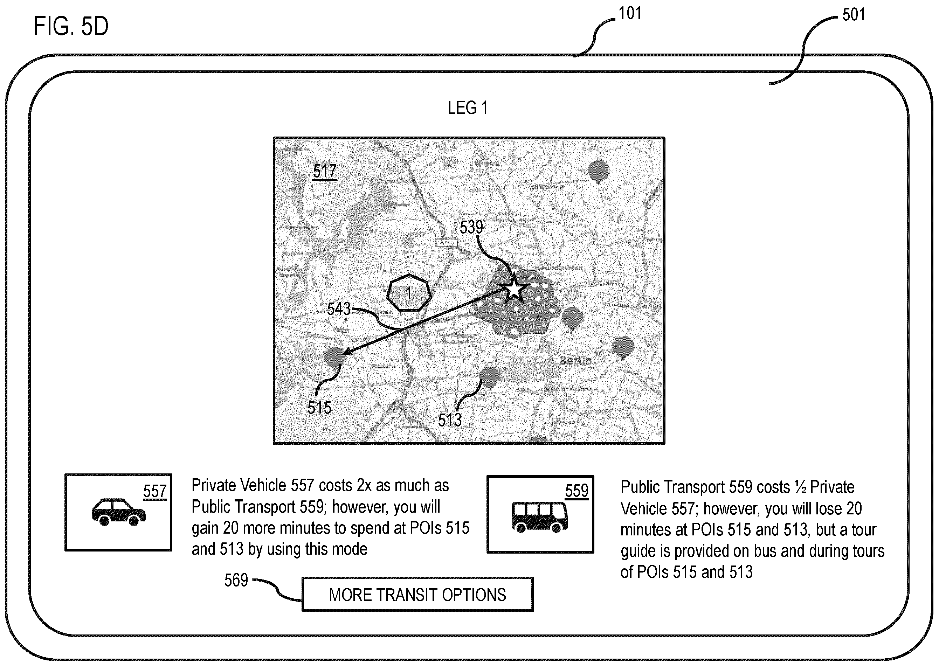

In one embodiment, the system 100 can generate the UI 501 such that a user can zoom in or focus on a particular route or trip (e.g., route 543 (Leg 1)) of the one or more tours to get more information and/or make one or more refinements of the tour (e.g., selecting a mode of transport), as depicted in FIG. 5D. Referring to FIG. 5D, the system 100 can surface or render additional information to a user regarding two potential modes of transport (e.g., private vehicle 557 and public transport 559). In this example, the system 100 can determine (e.g., based on information or data stored in or accessed via the geographic database 109) that private vehicle 557 costs 2 times as much as public transport 559; however, the user will gain 20 more minutes to spend at POIs 515 and 513 by selecting this mode of transit. In this example, the system 100 can similarly determine that public transport 559 costs one half as much as the private vehicle 557; however, the user will lose 20 minutes at POIs 515 and 513, but a tour guide is provided on the Public Transport 559 and during the tours of POIs 515 and 513. In one embodiment, the system 100 can generate the UI 501 such that a user can interact with the inputs 557 and 559 to select the desired or preferred mode of transport. In one instance, the system 100 can generate the UI 501 such that it includes an input 569 that can enable a user to view more transit options (if available).

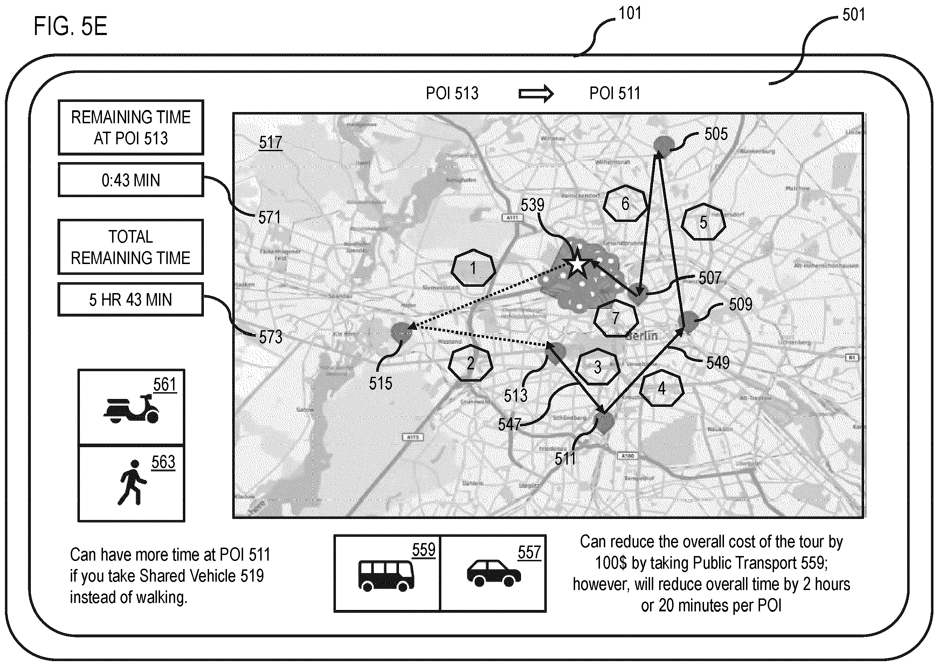

Referring to FIG. 5E, in one embodiment, the system 100 can generate the UI 501 such that it provides real-time or substantially real-time information and/or guidance to a user during a tour (e.g., "POI 513 → POI 511"). In one embodiment, the system 100 can generate the UI 501 such that it includes a display window 571 with which the system 100 can surface or present the calculated time remaining at a current POI (e.g., 0:43 mins at POI 513) before the user should leave for the next POI (e.g., POI 511) to stay on the computed schedule or itinerary for the tour. In one instance, the system 100 can generate the UI 501 such that it includes a display window 573 with which the system 100 can surface or present the calculated overall time remaining for the tour (e.g., "5 hours 43 min").

In one embodiment, based on the current location of a user (e.g., based on a device sensor 111), the system 100 can present one or more inputs or notifications to provide a user additional information regarding the tour and/or to allow the user to make one or more modifications to the tour. For example, in this instance, the system 100 can present a notification that the user "can have more time at POI 511 if she takes a shared vehicle 561 (e.g., which became available after the computation of the tour) instead of walking" as originally planned. In one embodiment, the system 100 can generate the inputs 561 and 563 such that the user can indicate her preference through one or more interactions with the inputs 561 and 563 and in the case of input 561, the user may reserve the shared vehicle 561 so that someone else does not take it while the user is finishing the tour of POI 513. In another example, the system 100 can present a notification that the user "can reduce the overall cost of the tour by $100 by taking public transport 559; however, that decision will reduce the overall time available for the tour by 2 hours or 20 minutes per POI." In one instance, the system 100 can generate the inputs 559 and 557 such that a user can indicate a preference through one or more interactions with the inputs 559 and 557 and in the case of input 559, the user may be able to book or reserve a seat, buy a ticket, etc.

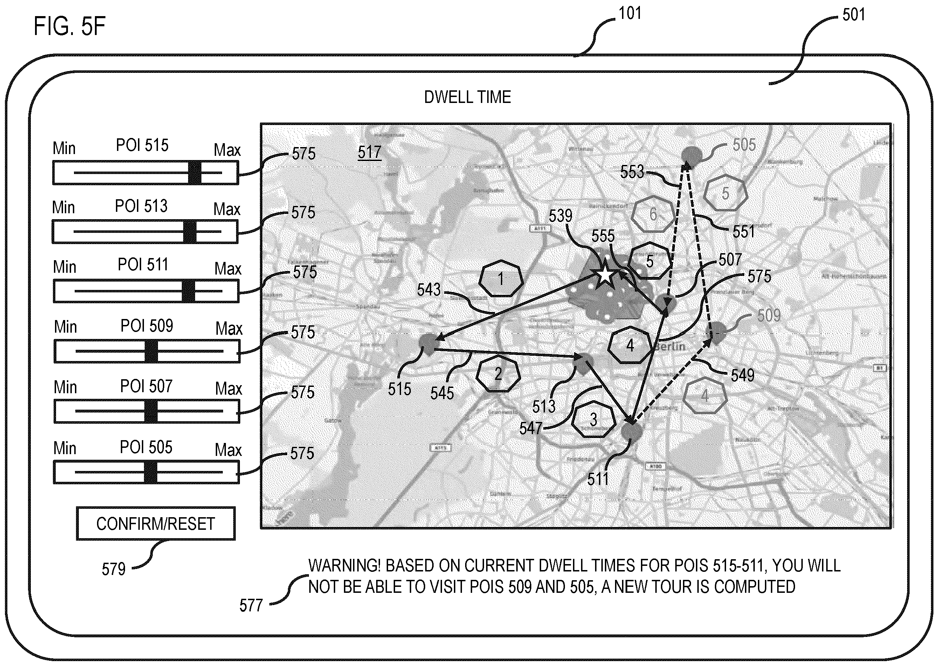

Referring to FIG. 5F, in one embodiment, the system 100 can generate the UI 501 (e.g., "Dwell Time") such that it includes an input 575 (e.g., a slider with a "min" and a "max") for each POI (e.g., POIs 505-515) that can enable a user to increase ("max") or decrease ("min") a desired dwell time for each POI of interest before or during a tour and the system 100 can surface or present any changes in the tour. In this instance, the system 100 can generate a warning 577, for example, "Warning! Based on current dwell times for POIs 515-511 (e.g., near max), you will not be able to visit POIs 509 and 505, a new tour is computed"). In one embodiment, the system 100 can generate the representation of the routes or trips such that the old routes (e.g., routes 549 (4), 551 (5), and 553 (6)) are graphically minimized in terms or their prominence or appearance (e.g., ghosted) and the new route 575 (4) may be added or included to graphically represent the new tour according to the user's interactions with the one or more inputs 575. In one embodiment, the system 100 can generate the UI 501 such that it includes an input 579 that can enable a user to confirm or reset the one or more modifications of the various one or more dwell times using the one or more inputs 575. In one instance, the system 100 can generate the UI 501 such that a user can modify and/or update the tour sequence (e.g., based on dwell times) before or during a tour.

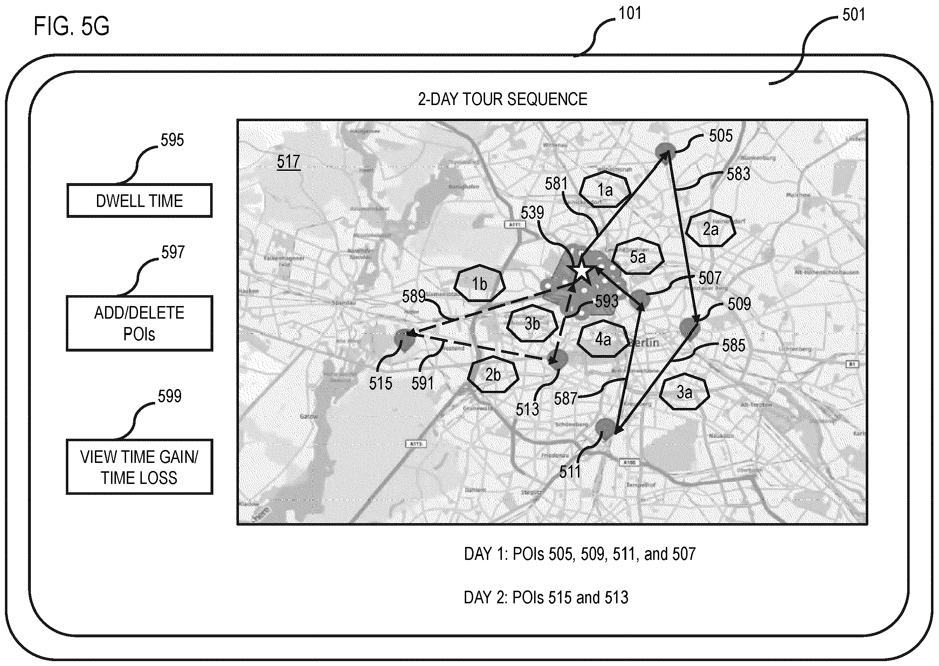

Referring to FIG. 5G, in one embodiment, the system 100 can generate the UI 501 (e.g., "2-Day Tour Sequence") such that it includes a representation of a tour sequence for visiting the POIs of interest (e.g., 505-515) optimally distributed across 2 days rather than 1. In this example, the system 100 can determine in contrast to the computed tour sequence of FIG. 5C, that the optimal distribution (e.g., minimal time spent) includes ordered POIs 505, 509, 511, and 507 on Day 1 and ordered POIs 515 and 513 on Day 2. In one embodiment, the system 100 can generate the UI 501 such that it includes a window or notification surfacing or presenting the order or sequence for each day (e.g., "Day 1: POIs 505, 509, 511, and 507 and Day 2: POIs 515 and 513").

In one embodiment, the system 100 can generate the UI 501 such that it includes an input 595 (e.g., "Dwell Time") that can enable a user to change the one or more dwell times for each of the POIs as described with respect to FIGs. 5A and 5F. In one embodiment, the system 100 can generate the UI 501 such that one or more interactions with the input 595 will surface or toggle the UI 501 described with respect to FIGs. 5A and 5F. In one instance, the system 100 can generate the UI 501 such that it includes input 597 (e.g., "Add/Delete POIs") that can enable a user to add/delete POIs like described with respect to FIG. 5A. In one embodiment, the system 100 can generate the UI 501 such that one or more interactions with the input 597 will surface or toggle the UI 501 described with respect to FIG. 5A. As previously described, in one instance, the system 100 can also generate the UI 501 such that the user can add or delete one or more POIs before or during the tour sequence (e.g., if time is scarce, if more time is available that originally thought, etc.).

In one embodiment, the system 100 can also generate the UI 501 such that it includes input 599 (e.g., "View Time Gain/Time Loss") that can enable a user to view (e.g., as a preview, in real-time, or substantially real-time) the time gained or lost by modifying the respective dwell times through one or more interactions with input 595 and/or by adding or deleting POIs through one or more interactions with input 597. In one instance, the input 599 can also enable a user to view possible time gain or time loss based on a user's current position (e.g., based on GPS sensors 113/117). In one embodiment, the system 100 can generate the UI 501 such that the functionality is the same or nearly the same for a single day tour sequence and a multi-day tour sequence.

Returning to FIG. 1, in one embodiment, the UEs 101 (e.g., a mobile device, a smartphone, a tablet, etc.) may be associated with a user (e.g., an individual, a tourist, a mobility service provider, a software provider, etc.) or with a vehicle 115 (e.g., an embedded navigation system). By way of example, the UEs 101 can be any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, fitness device, television receiver, radio broadcast receiver, electronic book device, game device, devices associated with one or more vehicles 115 or any combination thereof, including the accessories and peripherals of these devices, or any combination thereof. It is also contemplated that a UE 101 can support any type of interface to the user (such as "wearable" circuitry, etc.). In one embodiment, the vehicles 115 may have cellular or wireless fidelity (Wi-Fi) connection either through the inbuilt communication equipment or from a UE 101 associated with the vehicles 115. Also, the UEs 101 may be configured to access the communication network 105 by way of any known or still developing communication protocols. In one embodiment, the UEs 101 may include the mapping platform 103 to determine an optimal starting point and tour sequence based on a set of POIs to visit within a given timeframe.

In one embodiment, the UEs 101 include applications 107 (e.g., mapping applications, navigation applications, booking/reservation applications, review or recommendation applications, public transportation timetable applications, POI-based applications, etc.) and device sensors 113 (e.g., GPS sensors, a front facing camera, a rear facing camera, sound sensors, height sensors, tilt sensors, moisture sensors, pressure sensors, NFC sensors, wireless network sensors, etc.). In one embodiment, the GPS sensors 113 can enable the UEs 101 to obtain geographic coordinates from satellites 119 for determining current or live location and time. Further, a user location within an area may be determined by a triangulation system such as A-GPS, Cell of Origin, or other location extrapolation technologies when cellular or network signals are available.

In one embodiment, the mapping platform 103 performs the process for determining an optimal starting point and tour sequence based on a set of POIs to visit within a given timeframe as discussed with respect to the various embodiments described herein. In one embodiment, the mapping platform 103 can be a standalone server or a component of another device with connectivity to the communication network 105. For example, the component can be part of an edge computing network where remote computing devices (not shown) are installed along or within proximity of an intended destination (e.g., a city center).

In one embodiment, the machine learning system 111 of the mapping platform 103 can include a neural network or other machine learning system to compute the plurality of geographic locations (e.g., based on isoline routing data), a starting area (e.g., based on the plurality of geographic locations, one or more rankings, etc.) or one or more starting locations (e.g., based on one or more categories of POIs, one or more rankings, one or more parameters or preferences, etc.). In one instance, the machine learning system 111 can determine a tour set and/or another tour set based on the starting area or the one or more starting locations, the plurality of POIs, one or more travel times, one or more dwell times, the receipt of another request, or a combination thereof. In one instance, the machine learning system 111 can determine an optimal starting point using the TSP with population density and number of tours as inputs or using TSP with multiple modes such as private and public transport. In one embodiment, the machine learning system 111 can select and/or update the respective weights or weighting schemes related to the one or more travel times, the one or more dwell times, the one or more user parameters or preferences, or a combination thereof. For example, the machine learning system 111 can assign relatively greater weight to sequences of the plurality of POIs that minimize the one or more travel times and maximize the one or more dwell times taking into consideration any particular POI priority data (e.g., a "must see" POI). In one instance, the machine learning system 111 can assign relatively more weight to relatively more recent traffic data and/or mobility data compared with relatively less recent traffic data and/or mobility data as such data may likely have become stale or less accurate over time.

In one embodiment, the machine learning system 111 can iteratively improve the speed and accuracy by which the system 100 can determine the plurality of geographic locations, a starting area or one or more starting locations, a tour set and/or another tour set. Similarly, in one instance, the machine learning system 111 can iteratively improve the speed and accuracy by which the system 100 determines an optimal starting point, an optimal tour of the plurality of POIs, and/or an optimal timeframe to visit the plurality of POIs. In one embodiment, the neural network of the machine learning system 111 is a traditional convolutional neural network which consists of multiple layers of collections of one or more neurons (which are configured to process a portion of an input data). In one embodiment, the machine learning system 111 also has connectivity or access over the communication network 105 to the geographic database 109 that can store labeled or marked features (e.g., POIs with weighted preferences and desired dwelling times, starting point parameters, population density models, area specific mobility graphs, historical movement patterns, familiar places, ranked lists, respective weights or weighting schemes, etc.).

In one embodiment, the mapping platform 103 has connectivity over the communications network 105 to the services platform 121 (e.g., an OEM platform) that provides the services 123a-123n (also collectively referred to herein as services 123) (e.g., mapping services). By way of example, the services 123 may also include mapping services, navigation services, shared vehicle or mobility services, traffic incident services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services platform 121 uses the output of the mapping platform 103 (e.g. a UI representing the starting area, the one or more starting locations, the plurality of POIs, one or more recommended routes to conduct the tour, or a combination thereof) to provide location-based services such as navigation, mapping, bookings, reviews, other location-based services, etc.

In one embodiment, the content providers 125a-125n (also collectively referred to herein as content providers 125) may provide content or data (e.g., mobility graphs, historical movement patterns, familiar places, POIs with weighted preferences and desired dwelling times) road types and geometries, area population or density models, traffic data (e.g., vehicle and pedestrian), etc. to the UEs 101, the mapping platform 103, the applications 107, the geographic database 109, the machine learning system 111, the vehicles 115, the services platform 121, and the services 123. The content provided may be any type of content, such as map content, text-based content, audio content, video content, image content, etc. In one embodiment, the content providers 125 may provide content regarding the movement of a UE 101, a vehicle 115, or a combination thereof on a digital map or link as well as content that may aid in localizing a user path or trajectory on a digital map or link (e.g., to assist with determining the area that one or more users are likely in). In one embodiment, the content providers 125 may also store content associated with the mapping platform 103, the geographic database 109, the vehicles 115, the services platform 121, and/or the services 123. In another embodiment, the content providers 125 may manage access to a central repository of data, and offer a consistent, standard interface to data, such as a repository of the geographic database 109.

In one embodiment, a UE 101 and/or a vehicle 115 may be part of a probe-based system for collecting probe data for determine one or travel times between the plurality of POIs, one or more dwell times for each of the POIs, or a combination thereof. In one embodiment, each UE 101 and/or vehicle 115 is configured to report probe data as probe points, which are individual data records collected at a point in time that records telemetry data for that point in time. In one embodiment, the probe ID can be permanent or valid for a certain period of time. In one embodiment, the probe ID is cycled, particularly for consumer-sourced data, to protect the privacy of the source.

In one embodiment, a probe point can include attributes such as: (1) probe ID, (2) longitude, (3) latitude, (4) heading, (5) speed, and (6) time. The list of attributes is provided by way of illustration and not limitation. Accordingly, it is contemplated that any combination of these attributes or other attributes may be recorded as a probe point. For example, attributes such as altitude (e.g., for flight capable vehicles or for tracking non-flight vehicles in the altitude domain), tilt, steering angle, wiper activation, etc. can be included and reported for a probe point. In one embodiment, the vehicles 115 may include vehicle sensors 117 for reporting measuring and/or reporting attributes. The attributes can also be any attribute normally collected by an on-board diagnostic (OBD) system of the vehicles 115, and available through an interface to the OBD system (e.g., OBD II interface or other similar interface).

In one embodiment, the probe points can be reported from the UEs 101 and/or the vehicles 115 in real-time, in batches, continuously, or at any other frequency requested by the system 100 over, for instance, the communication network 105 for processing by the mapping platform 103. The probe points also can be map matched to specific road links stored in the geographic database 109. In one embodiment, the system 100 can generate user or vehicle paths or trajectories from the observed and expected frequency of probe points for an individual probe so that the probe traces represent routes for all available transport modes, user historical routes, or a combination thereof through a given area (e.g., a city or region).

In one embodiment, as previously stated, the vehicles 115 are configured with various sensors (e.g., vehicle sensors 117) for generating or collecting probe data, sensor data, related geographic/map data (e.g., traffic data), etc. In one embodiment, the sensor data may be associated with a geographic location or coordinates at which the sensor data was collected (e.g., a latitude and longitude pair). In one embodiment, the probe data (e.g., stored in or accessible via the geographic database 109) includes location probes collected by one or more vehicle sensors 117. By way of example, the vehicle sensors 117 may include a RADAR system, a LiDAR system, global positioning sensor for gathering location data (e.g., GPS), a network detection sensor for detecting wireless signals or receivers for different short-range communications (e.g., Bluetooth, Wi-Fi, Li-Fi, NFC, etc.), temporal information sensors, a camera/imaging sensor for gathering image data, an audio recorder for gathering audio data, velocity sensors mounted on a steering wheel of the vehicles 115, switch sensors for determining whether one or more vehicle switches are engaged (e.g., driving lights on), and the like. Though depicted as automobiles, it is contemplated the vehicles 115 can be any type of private, public, or shared manned or unmanned vehicle (e.g., cars, trucks, buses, vans, motorcycles, scooters, bicycles, drones, etc.) that can traverse an area (e.g., a city, a state, a region, etc.).

Other examples of sensors of a vehicle 115 may include light sensors, orientation sensors augmented with height sensors and acceleration sensor (e.g., an accelerometer can measure acceleration and can be used to determine orientation of the vehicle), tilt sensors to detect the degree of incline or decline of a vehicle 115 along a path of travel, moisture sensors, pressure sensors, etc. In a further example embodiment, vehicle sensors 117 about the perimeter of a vehicle 115 may detect the relative distance of the vehicle 115 from a physical divider, a lane line of a link or roadway, the presence of other vehicles, pedestrians, traffic lights, potholes and any other objects, or a combination thereof. In one scenario, the vehicle sensors 117 may detect contextually available information such as weather data, traffic information, or a combination thereof. In one embodiment, a vehicle 115 may include GPS or other satellite-based receivers 117 to obtain geographic coordinates from satellites 119 for determining current location and time in relation to a reference mobility pattern, one or more POIs of the plurality, or a combination thereof. Further, the location can be determined by visual odometry, triangulation systems such as A-GPS, Cell of Origin, or other location extrapolation technologies.

In one embodiment, the UEs 101 may also be configured with various sensors (e.g., device sensors 113) for acquiring and/or generating probe data and/or sensor data associated with a user, a vehicle 115 (e.g., a driver or a passenger), other vehicles, attributes or characteristic of a given area (e.g., a city, a region, a state, etc.). For example, the device sensors 113 may be used as GPS receivers for interacting with the one or more satellites 119 to determine a user location (origin) as well as to track the current speed, position and location of a user or a vehicle 115 travelling along a link or on a road segment (e.g., when recording travel times, dwell times, area specific mobility patterns, etc.). In addition, the device sensors 113 may gather tilt data (e.g., a degree of incline or decline of a vehicle 115 during travel), motion data, light data, sound data, image data, weather data, temporal data, and other data associated with the vehicles 115 and/or UEs 101. Still further, the device sensors 113 may detect local or transient network and/or wireless signals (e.g., transaction information), such as those transmitted by nearby devices during navigation along a roadway (Li-Fi, NFC), etc.

It is noted therefore that the above described data may be transmitted via the communication network 105 as probe data according to any known wireless communication protocols. For example, each UE 101, application 107, user, and/or vehicle 115 may be assigned a unique probe identifier (probe ID) for use in reporting or transmitting said probe data collected by the UEs 101 and/or vehicles 115. In one embodiment, each UE 101 and/or vehicle 115 is configured to report probe data as probe points, which are individual data records collected at a point in time that records telemetry data.

In one embodiment, the mapping platform 103 retrieves aggregated probe points gathered and/or generated by the device sensors 113 and/or vehicle sensors 117 resulting from the travel of the UEs 101 and/or vehicles 115 on a road segment of a road network of a digital map (e.g., as the part of the process of generating area specific mobility graphs, travel times, dwell times, or a combination thereof). In one instance, the geographic database 109 stores a plurality of probe points and/or trajectories generated by different UEs 101, applications 107, device sensors 113, vehicles 115, and vehicle sensors 117, etc. over a period while traveling to and between multiple POIs in a large monitored area (e.g., a city). A time sequence of probe points specifies a trajectory—i.e., a path traversed by a UE 101, a vehicle 115, etc. over the period.

In one embodiment, the communication network 105 of the system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one embodiment, the mapping platform 103 may be a platform with multiple interconnected components. The mapping platform 103 may include multiple servers, intelligent networking devices, computing devices, components, and corresponding software for providing parametric representations of lane lines. In addition, it is noted that the mapping platform 103 may be a separate entity of the system 100, a part of the services platform 121, a part of the one or more services 123, or included within a vehicle 115 (e.g., an embedded navigation system).

In one embodiment, the geographic database 109 can store information or data regarding one or more travel times, one or more dwell times, one or more timeframes, population density data associated with the plurality of POIs and/or associated with one or more modes of transport to be used during a tour, POI priority data, user preference data, historical mobility data, or a combination thereof. In one instance, the geographic database 109 can store information or data relative to one or more POIs (e.g., price, ratings, reviews, etc.). In one embodiment, the geographic database 109 can store information or data regarding one or more user preferences (e.g., transport modes, etc.), user calendar entries, a set of known locations, starting point parameters, or a combination thereof. In one instance, the geographic database 109 can store starting location ranking factors and attributes (e.g., environmentally conscious hotels), probability factors, ranking or probability threshold values, weights and/or weighting schemes, labeled and/or marked features and attributes, etc. The information may be any of multiple types of information that can provide means for determining an optimal starting point and tour sequence based on a set of POIs to visit within a given timeframe. In one embodiment, the geographic database 109 can be in a cloud and/or in a UE 101, a vehicle 1153, or a combination thereof.

By way of example, the UEs 101, mapping platform 103, applications 107, device sensors 113, vehicles 115, vehicle sensors 117, satellites 119, services platform 121, services 123, and/or content providers 125 communicate with each other and other components of the system 100 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical

(layer 1) header, a data-link (layer 2) header, an internetwork (layer 3) header and a transport (layer 4) header, and various application (layer 5, layer 6 and layer 7) headers as defined by the OSI Reference Model.

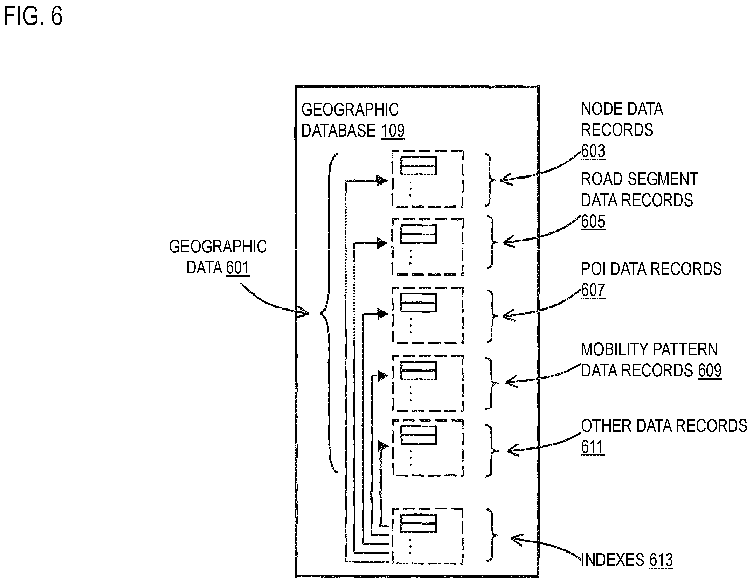

FIG. 6 is a diagram of a geographic database, according to example embodiment(s). In one embodiment, the geographic database 109 includes geographic data 601 used for (or configured to be compiled to be used for) mapping and/or navigation-related services. In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 109.

"Node" - A point that terminates a link.

"Line segment" - A straight line connecting two points.

"Link" (or "edge") - A contiguous, non-branching string of one or more-line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 109 follows certain conventions. For example, links do not cross themselves and do not cross each other except at a node. Also, there are no duplicated shape points, nodes, or links. Two links that connect each other have a common node. In the geographic database 109, overlapping geographic features are represented by overlapping polygons. When polygons overlap, the boundary of one polygon crosses the boundary of the other polygon. In the geographic database 109, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 109 includes node data records 603, road segment or link data records 605, POI data records 607, mobility pattern data records 609, other records 611, and indexes 613, for example. More, fewer, or different data records can be provided. In one embodiment, additional data records (not shown) can include cartographic ("carto") data records, routing data, and maneuver data. In one embodiment, the indexes 613 may improve the speed of data retrieval operations in the geographic database 109. In one embodiment, the indexes 613 may be used to quickly locate data without having to search every row in the geographic database 109 every time it is accessed. For example, in one embodiment, the indexes 613 can be a spatial index of the polygon points associated with stored feature polygons.

In exemplary embodiments, the road segment data records 605 are links or segments representing roads, streets, or paths (e.g., that are unique to an area) that can be used in the mobility pattern comparison for determining an optimal starting point and tour sequence based on a set of POIs to visit within a given timeframe. The node data records 603 are end points corresponding to the respective links or segments of the road segment data records 605. The road link data records 605 and the node data records 603 represent a road network, such as used by vehicles 115 and/or other entities. Alternatively, the geographic database 109 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as a restaurant, a coffee shop, a bakery, a sport venue, a cultural venue, a museum, an office or office building, a store, a shopping mall, a market, a bazaar, a transit hub, a train station, a landmark, a historic battlefield, a monument, a beach, etc. The geographic database 109 can include data about the POIs and their respective locations in the POI data records 607. In one embodiment, the POI data records 607 can include population density data, popularity or preference data, prices, ratings, reviews, and various other attributes. In one instance, the POI data records 607 may include related isoline routing data. The geographic database 109 can also include data about places, such as cities, towns, or other communities, and other geographic features, such as bodies of water, mountain ranges, etc. Such place or feature data can be part of the POI data records 607 or can be associated with POIs or POI data records 607 (such as a data point used for displaying or representing a portion of a city).

In one embodiment, the geographic database 109 includes mobility pattern data records 609 (e.g., historic or observed travel times, historical or observed dwell times, mobility graphs, historic movement patterns, user preferences, etc.) related to a UE 101 (e.g., a mobile device, a smartphone, etc.), a vehicle 115 (e.g., a standard vehicle, an autonomous vehicle, a semi-autonomous vehicle, a shared vehicle, etc.), or a combination thereof. By way of example, the historic or observed travel times and/or dwell times may be previously recorded data, crowdsourced data, or a combination thereof. In one instance, the mobility pattern data records 609 may also include user mobility graph/user mobility patterns, road attributes, traffic data (e.g., vehicle and pedestrian), parking conditions and/or restrictions, ranking or probability weights or weighting schemes, labeled and/or marked features and attributes, and/or any other related data. In one embodiment, the mobility pattern data records 609 can be associated with one or more of the node data records 603, road segment or link records 605, and/or POI data records 607; or portions thereof (e.g., smaller or different segments than indicated in the road segment records 605) to determine an optimal starting point and tour sequence based on a set of POIs to visit within a given timeframe.

In one embodiment, the geographic database 109 can be maintained by the services platform 121 (e.g., a map developer). The map developer can collect geographic data to generate and enhance the geographic database 109. There can be different ways used by the map developer to collect data. These ways can include obtaining data from other sources, such as municipalities or respective geographic authorities. In addition, the map developer can employ field personnel to travel by vehicle along roads throughout an area of interest to observe features (e.g., road types and geometries, traffic or travel times, etc.) and/or record information about them, for example. Similarly, the map developer can employ field personnel to travel by foot throughout an area of interest to observe non-vehicular related features (e.g., dwell times, population densities, etc.). Also, remote sensing, such as aerial or satellite photography, can be used.

In one embodiment, the geographic database 109 include high resolution or high definition (HD) mapping data that provide centimeter-level or better accuracy of map features. For example, the geographic database 109 can be based on LiDAR or equivalent technology to collect billions of 3D points and model road surfaces and other map features down to the number lanes and their widths. In one embodiment, the HD mapping data capture and store details such as the slope and curvature of the road, lane markings, roadside objects such as signposts, including what the signage denotes. By way of example, the HD mapping data enable highly automated vehicles 115 to precisely localize themselves on a road, and to determine the road attributes (e.g., direction of traffic) at high accuracy levels.

In one embodiment, the geographic database 109 is stored as a hierarchical or multilevel tile-based projection or structure. More specifically, in one embodiment, the geographic database 109 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

The geographic database 109 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a UE 101, a device sensor 113, a vehicle 115, and/or a vehicle sensor 117. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for determining an optimal starting point and tour sequence based on a set of POIs to visit within a given timeframe may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

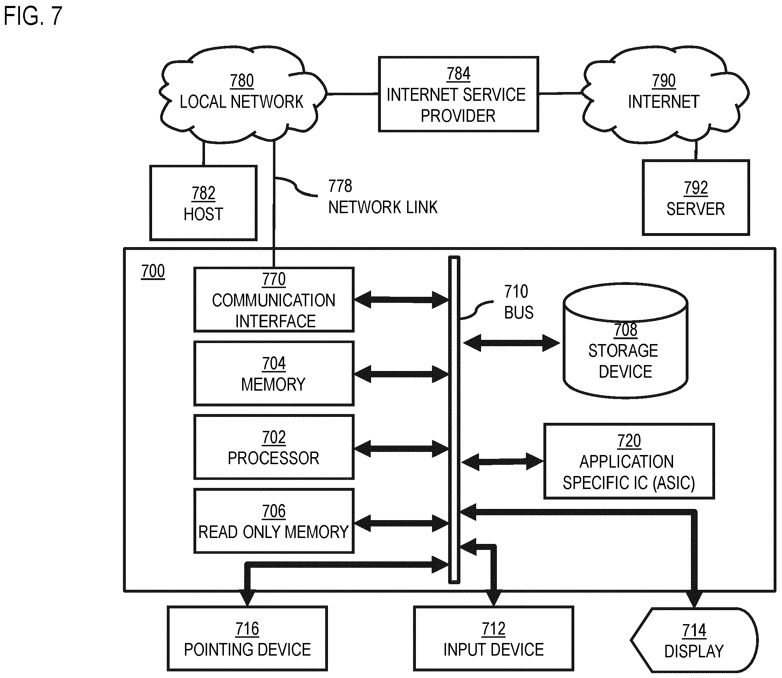

FIG. 7 illustrates a computer system 700 upon which example embodiment(s) of the invention may be implemented. Computer system 700 is programmed (e.g., via computer program code or instructions) to determine an optimal starting point and tour sequence based on a set of POIs to visit within a given timeframe as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 710 includes one or more parallel conductors of information so that information is transferred quickly among devices coupled to the bus 710. One or more processors 702 for processing information are coupled with the bus 710.

A processor 702 performs a set of operations on information as specified by computer program code related to determining an optimal starting point and tour sequence based on a set of POIs to visit within a given timeframe. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random-access memory (RAM) or other dynamic storage device, stores information including processor instructions for determining an optimal starting point and tour sequence based on a set of POIs to visit within a given timeframe. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for determining an optimal starting point and tour sequence based on a set of POIs to visit within a given timeframe, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners, and external disks. In general, the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic, or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 105 for determining an optimal starting point and tour sequence based on a set of POIs to visit within a given timeframe.

The term computer-readable medium is used herein to refer to any medium that participates in providing information to processor 702, including instructions for execution. Such a medium may take many forms, including, but not limited to, non-volatile media, volatile media, and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system can be deployed in various configurations within other computer systems, e.g., host 782 and server 792.

FIG. 8 illustrates a chip set 800 upon which example embodiment(s) of the invention may be implemented. Chip set 800 is programmed to determine an optimal starting point and tour sequence based on a set of POIs to visit within a given timeframe as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively, or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to determine an optimal starting point and tour sequence based on a set of POIs to visit within a given timeframe. The memory 805 also stores the data associated with or generated by the execution of the inventive steps.

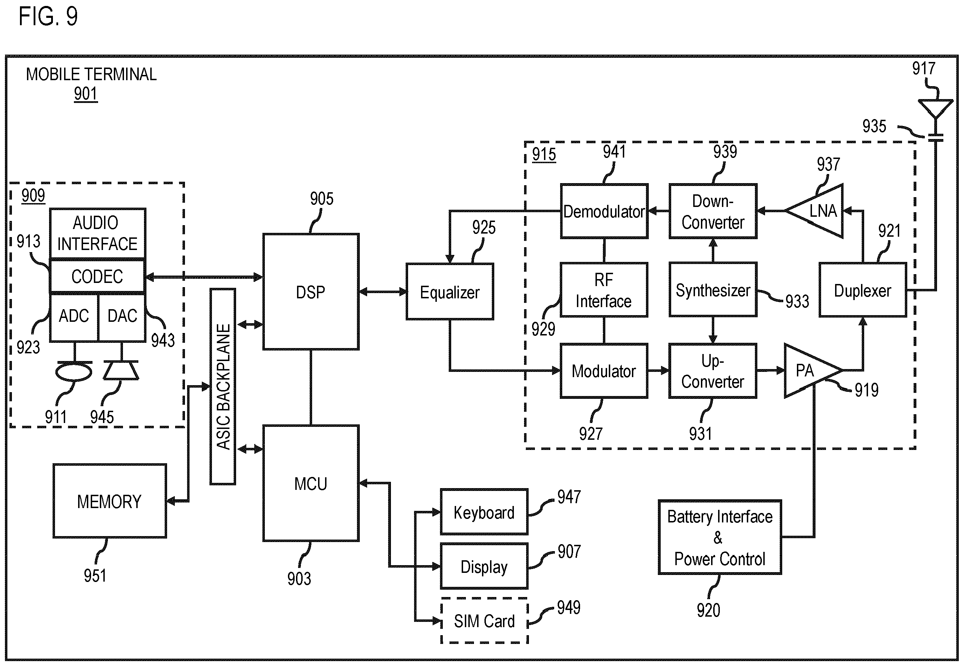

FIG. 9 is a diagram of exemplary components of a mobile terminal 901 (e.g., a UE 101, a vehicle 115, or a component thereof) capable of operating in the system of FIG. 1, according to example embodiment(s). Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile station functions that offer automatic contact matching. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile station 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903-which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile station 901 to determine an optimal starting point and tour sequence based on a set of POIs to visit within a given timeframe. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the station. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile station 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 951 may be, but not limited to, a single memory, CD, DVD, ROM, RAM, EEPROM, optical storage, or any other non-volatile or non-transitory storage medium capable of storing digital data.

An optionally incorporated SIM card 949 carries, for instance, important information, such as the cellular phone number, the carrier supplying service, subscription details, and security information. The SIM card 949 serves primarily to identify the mobile station 901 on a radio network. The card 949 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
receiving a request specifying a plurality of points of interest;
determining a plurality of geographic locations associated with the plurality of points of interest;
determining a starting area or one or more starting locations within the starting area from which to start a tour of the plurality of points of interest based on the determined plurality of geographic locations; and
providing the starting area or the one or more starting locations as an output.

2. The method of claim 1, further comprising:
calculating isoline routing data between the plurality of points of interest to determine the starting area,
wherein the starting area is bounded by one or more isolines indicated in the isoline routing data.

3. The method of claim 1, further comprising:
determining the one or more starting locations based on a spatial search of the starting area, wherein the spatial search is based on one or more categories of points of interests.

4. The method of claim 1, wherein the one or more starting locations comprise possible accommodation(s).

5. The method of claim 1, further comprising:
determining a tour set based on the starting area or the one or more starting locations and the plurality of points of interest,
wherein the tour set comprises a sequence of the plurality of points of interest to visit during the tour; and
wherein the output further includes a representation of the tour set.

6. The method of claim 5, wherein the tour is a multi-day tour, and wherein the tour set is determined for each day of the multi-day tour.

7. The method of claim 5, further comprising:
receiving another request specifying the sequence, the one or more dwell times, the plurality of points of interest, or a combination thereof after the determination of the tour set;
determining another tour set based on the receipt of the another request; and
wherein the output further includes a representation of the another tour set.

8. The method of claim 5, wherein the request further specifies one or more dwell times, one or more timeframes for conducting the tour, or a combination thereof, and
wherein the tour set is further based on the specified one or more dwell times, one or more timeframes, or a combination thereof.

9. The method of claim 8, wherein the one or more timeframes includes a specified number of days, a specified number of hours in a day, a date, a date range, a season, or a combination thereof for conducting the tour.

10. The method of claim 5, further comprising:
determining one or more travel times between the plurality of points of interest, one or more dwell times for each of the plurality of points of interest, or a combination thereof,
wherein the tour set is further based on the one or more travel times, the one or more dwell times, or a combination thereof, and
wherein the tour set comprises time data for visiting the plurality of points of interests according to the sequence.

11. The method of claim 10, wherein the one or more travel times are determined based on one or more modes of transport to be used during the tour.

12. The method of claim 10, wherein the sequence, the time data, the one or more dwell times, or a combination thereof is based on first population density data associated with the plurality of points of interest, second population density data associated with one or more modes of transport to be used during the tour, point of interest priority data, preference data, historical mobility data, or a combination thereof.

13. The method of claim 1, wherein the output comprises a user interface representing the starting area, the one or more starting locations, the plurality of points of interest locations, one or more recommended routes to conduct the tour, or a combination thereof.

14. An apparatus comprising:
at least one processor; and
at least one memory including computer program code for one or more programs,
the at least one memory and the computer program code configured to, with the at least one processor, cause the apparatus to perform at least the following operations:
receive a request specifying a plurality of points of interest;
determine a plurality of geographic locations associated with the plurality of points of interest;
determine a starting area or one or more starting locations within the starting area from which to start a tour of the plurality of points of interest based on the determined plurality of geographic locations; and
provide the starting area or the one or more starting locations as an output.

15. A non-transitory computer-readable storage medium having stored thereon one or more program instructions which, when executed by one or more processors, cause an apparatus to at least perform the following operations:
receiving a request specifying a plurality of points of interest;
determining a plurality of geographic locations associated with the plurality of points of interest;
determining a starting area or one or more starting locations within the starting area from which to start a multi-day tour of the plurality of points of interest based on the determined plurality of geographic locations; and
providing the starting area or the one or more starting locations as an output.
